# EUROPÄISCHE PATENTSCHRIFT

(11) **EP 1 044 999 B1**
(45) Veröffentlichungstag und Bekanntmachung des Hinweises auf die Patenterteilung: **22.09.2004**
(21) Anmeldenummer: 00107530.8
(22) Anmeldetag: 07.04.2000
(51) Int. Cl.: C08G 75/18, C08G 75/02

(54) **Verfahren zur Oxidation von Polyarylensulfid zu Polyarylensulfoxid mittels Salpetersäure**
Process for the oxidation of poly(arylenesulfide) into poly(arylenesulfoxide) with nitric acid
Procédé pour la préparation de polyarylenesulfoxides par oxydation de polyarylenesulfide avec acide nitrique

(30) Priorität: 12.04.1999 DE 19916495
(43) Veröffentlichungstag der Anmeldung: 18.10.2000
(73) Patentinhaber: Ticona GmbH, 65451 Kelsterbach (DE)
(72) Erfinder: Zierer, Dirk, Dr., 65719 Hofheim (DE); Scheckenbach, Helmut, Dipl.-Ing., 63225 Langen (DE); Dierolf, Michael, 65620 Waldbrunn/WW (DE)

(56) Entgegenhaltungen:
- EP-A- 0 738 760
- EP-A- 0 790 274
- EP-A- 0 829 505
- WO-A-96/05246
- WO-A-96/15178
- DE-A- 19 751 239
- DE-B- 1 211 399

## Beschreibung

Die vorliegende Erfindung betrifft ein Verfahren zur Oxidation von Polyarylensulfid zu Polyarylensulfoxid mittels Salpetersäure, bei dem mindestens 98 % der Sulfidgruppen des Polyarylensulfides zu Sulfoxidgruppen oxidiert werden.

Polyarylensulfoxide sind technische Spezialpolymere, die insbesondere dort Anwendung finden, wo hohe Anforderungen an den Polymeren Werkstoff gestellt werden. So zeichnen sich Polyarylensulfoxide beispielsweise durch hohe Glas-, Schmelz- und Zersetzungstemperaturen aus.
Polyarylensulfoxide sind darüber hinaus insofern technisch von besonderem Interesse, als sie sich als Hochtemperaturtreibmittel bei der Herstellung von Kunststoffschäumen verwenden lassen.

Trotz dieser vielfältigen vorteilhaften Materialeigenschaften ist der Einsatz von Polyarylensulfoxiden bislang noch nicht sehr weit verbreitet, weil die Herstellung dieser Polymere technisch aufwendig und das Material aus diesem Grund relativ teuer ist.

Nach dem Stand der Technik gelingt die Synthese von reinem Polyarylensulfoxid, das einen Anteil an Sulfoxidgruppen in der Polymerkette ≥ 99 % aufweist, durch Eintragen von Polyarylensulfid-Pulver in 86 %-ige Salpetersäure. Das Polyarylensulfid geht dabei im Verlauf der Reaktion unter starker Entwicklung von nitrosen Gasen in Lösung, wodurch die vollständige Oxidation gewährleistet wird, und muß anschließend durch Fällung in Wasser isoliert werden. Dieser Syntheseweg wurde von Dr. M. Peter in seiner Dissertation "Synthese und Strukturmodifizierung von Poly(thio- 1,4-phenylen)" beschrieben, angefertigt an der Universität Marburg im Zeitraum von 1992 - 1994 im Arbeitskreis von Prof. Heitz.

Das bekannte Verfahren, das ursprünglich nur zur Charakterisierung des eingesetzten Polyarylensulfids diente, wurde später zur Herstellung von Polyarylensulfoxid-Mustermengen insofern optimiert, als herausgefunden wurde, dass sich beispielsweise in 600 Volumeneinheiten 86 %-iger HNO₃ circa 130 bis 150 Gewichtseinheiten PPS-Pulver (PPS = Polyphenylensulfid) lösen lassen. Die viskose Lösung kann anschließend unter starkem Rühren (mit einem Ultraturrax) in einen großen Überschuß Wasser eingetropft werden, wonach das ausgefallene PPSO (PPSO = Polyphenylensulfoxid) als Reaktionsprodukt abgesaugt, neutral gewaschen und getrocknet werden kann.

Dieses sogenannte HNO₃-Verfahren eignet sich allerdings nicht gut zur Übertragung in den großtechnischen Maßstab und in die Produktion, weil die aufwendige Isolierung des Produktes aus dem Reaktionsgemisch das Verfahren teuer und damit unwirtschaftlich macht. Auch die technische Handhabung von Salpetersäure in dieser hohen Konzentration ist sehr aufwendig. Aus diesen Gründen wurden weitere Varianten von Verfahren zur Herstellung von PPSO durch Oxidation von PPS vorgeschlagen.

Eine erste Alternative besteht in der Oxidation von PPS mit N₂O₄ im Autoklaven direkt in einer Gas/Festphasenreaktion oder mit Methylenchlorid als Suspensionsmittel oder in Dichloressigsäure als Lösungsmittel. Letztere Verfahrensweise unterscheidet sich allerdings kaum von dem bekannten HNO₃-Verfahren, da das PPSO dabei auch in Lösung geht und mühsam wieder isoliert werden muss (EP-A-0 791 027).

Eine weitere Alternative besteht in einem Verfahren, bei dem die Oxidation mit H₂O₂ in Schwefelsäure (→ Caro'sche Säure) oder Dichloressigsäure (→ Dichlorperessigsäure) unter speziellen Bedingungen durchgeführt wird und das in der DE-A 197 51 239.9 beschrieben ist.

Bei den oben genannten Verfahren hat sich insbesondere das Verfahren in Schwefelsäure mit H₂O₂ als Oxidationsmittel wegen der Qualität des dabei entstehenden Produkts, was den Oxidationsgrad und den Gewichtsverlust bei der Zersetzung angeht, und seiner technischen Realisierbarkeit, nämlich was die Handhabung der eingesetzten und freiwerdenden Stoffe betrifft, als technisch besonders interessant herausgestellt.

Nachteiligerweise muss man aber bei dem H₂SO₄/H₂O₂-Verfahren, im Gegensatz zu dem HNO₃-Verfahren, sehr genau auf die Stöchiometrie der Reaktionskomponenten achten und darüber hinaus auch die Dosierung des Oxidationsmittels in sehr kleinen Schritten vornehmen, weil sonst die Gefahr der Überoxidation und der Bildung unerwünschter Sulfongruppen auftritt.

EP-A-829 505 offenbart ein Verfahren zur Oxidation von Polyarylensulfid mit 65% iger Salpetersäure bei 60°C bei welchem 97% der Sulfidgruppen zu Sulfoxidgruppen oxidiert werden. Aufgabe der vorliegenden Erfindung war es daher, ein Verfahren zur Herstellung von Polyarylensulfoxid durch Oxidation von Polyarylensulfid anzugeben, das reines Polyarylensulfoxid in guter Ausbeute liefert und das insofern technisch einfach handhabbar ist, als das dabei entstehende Produkt, Polyarylensulfoxid, mit einfachen Mitteln aus dem Reaktionsgemisch isoliert werden kann.

Gelöst wird diese Aufgabe durch ein Verfahren der eingangs genannten Gattung, dessen Kennzeichenmerkmal darin zu sehen ist, dass Polyarylensulfid mit Salpetersäure in einer Konzentration im Bereich von 60 bis 80 % bei einer Temperatur im Bereich zwischen 75 und 100°C behandelt wird.

Als Polyarylensulfid wird erfindungsgemäß bevorzugt Polyphenylensulfid (PPS) eingesetzt. Es können aber auch Polymere mit anderen Aryleneinheiten mit bis zu 20 C-Atomen wie Naphthylen oder Anthrachinoneinheiten oder mit substituierten Phenyleneinheiten mit Substituenten mit 1 bis 10 C-Atomen oder mit heteroaromatischen Aryleneinheiten erfindungsgemäß umgesetzt werden.

Die Konzentration der Salpetersäure, die erfindungsgemäß bevorzugterweise zur Oxidation der Polyarylensulfide eingesetzt wird, liegt im Bereich von 60 bis 80 %, bevorzugt im Bereich von 65 bis 75 %, und besonders bevorzugt im Bereich von 68 bis 69,99 %.

Die Temperatur, bei der die erfindungsgemäße Oxidation der Polyarylensulfide mit Salpetersäure durchgeführt wird, liegt im Bereich zwischen 75 und 100 °C, besonders bevorzugt im Bereich von 80 bis 90 °C.

Die Zeitdauer, über die die erfindungsgemäße Oxidation von Polyarylensulfid zu Polyarylensulfoxid durchgeführt wird, liegt im Bereich von 30 bis 120 min, vorzugsweise im Bereich von 60 bis 80 min.

Die Menge an Salpetersäure, die für die vollständige Oxidation des Polyarylensulfids notwendig ist, wird erfindungsgemäß so eingestellt, dass das Molverhältnis von HNO₃ zu Polyarylensulfid im Bereich von 5 : 1 bis 20 : 1 liegt, vorzugsweise im Bereich von 9,0 : 1 bis 11 : 1, besonders bevorzugt im Bereich von 9,5 : 1 bis 10,5 : 1.

Zusätzlich kann erfindungsgemäß Luft oder Sauerstoff durch den Reaktor geleitet werden, um während der Oxidationsreaktion entstehendes NO gleich zu NO₂ weiterzuoxidieren, das sich vorteilhafterweise mit geringerem technischen Aufwand kondensieren und zurückgewinnen läßt.

Die Isolierung des entstandenen Polyarylensulfoxids aus der Reaktionsmischung geschieht erfindungsgemäß durch Abkühlen der Reaktionsmischung nach Ablauf der Reaktionszeit auf eine Temperatur von 60 bis 70 °C, wobei ab einer Temperatur von 75 °C schon erste Mengen an durch die Oxidation entstandenem Polyarylensulfoxid auszufallen beginnen, und anschließendes Verdünnen der abgekühlten Reaktionsmischung mit Wasser unter ständigem Rühren. Wenn die Mischung dann nach weiterem Abkühlen eine Temperatur im Bereich von 20 bis 50 °C erreicht hat, kann das Produkt abfiltriert, mit Wasser neutral gewaschen und zum Beispiel in einem Trockenschrank oder Trockner getrocknet werden.

Da das erste Filtrat eine recht hohe Säurekonzentration besitzt, lässt es sich gegebenenfalls wieder zu Salpetersäure mit der gewünschten Konzentration für die Oxidationsreaktion aufarbeiten und so in den Reaktionskreislauf zurückführen.

Die Erfindung und ihre technischen Vorteile sollen nachfolgend durch die Ausführungsbeispiele für den Fachmann noch deutlicher dargestellt werden.

### Beispiele 1 bis 12

Im Rahmen einer Versuchsreihe gemäß den Beispielen 1 bis 12 wurde versucht, die Oxidation von PPS zu PPSO mit käuflicher Salpetersäure, die eine Konzentration von 69,6 ± 0,1 % besaß, zu optimieren. Hierzu wurde das Reaktionsgefäß schrittweise modifiziert (Rundkolben mit KPG-Rührer; Doppelmantelreaktor mit Stahlrührer; Zuschaltung von Intensivkühlern zur Rückgewinnung entweichender nitroser Gase) oder es wurde das Verfahren insofern modifiziert, als entweder PPS-Pulver vorgelegt und Salpetersäure zugegeben wurde oder, umgekehrt, Salpetersäure vorgelegt und PPS zugegeben wurde. Ferner wurde Luft oder Sauerstoff zugeführt, um entstehende nitrose Gase aufzuoxidieren, damit sie sich besser kondensieren und zurückgewinnen lassen.

### Beispiel 1

In einem 1-Liter Rundkolben mit Rührer wurden 355 g Salpetersäure (69,6 %), entsprechend einer Menge von 3,92 mol, bei einer Temperatur von 70 °C vorgelegt. Unter kräftigem Rühren wurde eine Gesamtmenge von 45,0 g PPS, entsprechend einer Menge von 0,42 mol, als feines Pulver über einen Zeitraum von 15 min zugegeben. Das Molverhältnis HNO₃ : PPS betrug 9,33 : 1. Anschließend wurde über eine Zeit von weiteren 15 min bei einer Temperatur von 90 °C weitergerührt.

Danach ließ man das Reaktionsgemisch abkühlen, auskristallisiertes Produkt wurde abfiltriert, mit Wasser neutral gewaschen und im Trockenschrank bei 120 °C getrocknet. Die Ergebnisse sind in der nachfolgenden Tabelle 1 zusammengestellt.

### Beispiel 2

Es wurde wie in Beispiel 1 verfahren, jedoch wurde das PPS als grobes Pulver zugegeben. Das Molverhältnis HNO₃ : PPS betrug ebenfalls 9,33 : 1.

### Beispiel 3

43,2 g PPS, entsprechend einer Menge von 0,4 mol, wurden in einem 1-Liter Rundkolben mit Rührer vorgelegt und bei Raumtemperatur mit 370 g Salpetersäure (69,6 %), entsprechend einer Menge von 4,10 mol, vermischt. Das Molverhältnis HNO₃ : PPS betrug 10,25 : 1. Unter ständigem Rühren wurde das Reaktionsgemisch auf eine Temperatur von 90 °C erhitzt und über eine Zeitdauer von 60 min bei dieser Temperatur reagieren gelassen. Die Aufarbeitung erfolgte wie in Beispiel 1, die Ergebnisse sind in der nachfolgenden Tabelle 1 aufgeführt.

### Beispiel 4

Es wurde wie in Beispiel 3 verfahren, jedoch wurde das Reaktionsgefäß mit einem Rückflusskühler verbunden. Das Molverhältnis HNO₃ : PPS betrug ebenfalls wieder 10,25 : 1. Die Reaktionstemperatur betrug 91 °C und die Reaktionszeit 65 min. Die Ergebnisse befinden sich in der Tabelle 1.

### Beispiel 5

Es wurde wie in Beispiel 3 verfahren, jedoch wurde das Reaktionsgefäß mit einem Intensivkühler verbunden. Das Molverhältnis HNO₃ : PPS betrug wieder 10,25 : 1. Die Reaktionstemperatur wurde auf 87 °C eingestellt und die Reaktionszeit betrug 45 min.

### Beispiel 6

In einem 2-Liter Rundkolben mit Rührer und Intensivkühler wurden 108,1 g PPS, entsprechend 1,0 mol, mit 900 g Salpetersäure (69,6 %), entsprechend 9,95 mol, bei Raumtemperatur vermischt. Das Molverhältnis HNO₃: PPS betrug 9,95 : 1. Dann wurde das Reaktionsgemisch auf eine Temperatur von 90 °C erhitzt und bei konstanter Temperatur über eine Zeitdauer von 45 min unter ständigem Rühren und leichter Begasung mit synthetischer Luft reagieren gelassen. Die Aufarbeitung des Reaktionsgemisches geschah wie in Beispiel 1.

### Beispiel 7

Es wurde wie in Beispiel 6 verfahren, jedoch war das Reaktionsgefäß mit 2 Intensivkühlern verbunden. Das Molverhältnis HNO₃ : PPS betrug 9,95 : 1. Die Reaktionstemperatur wurde auf 88 °C eingestellt und die Reaktionszeit auf 40 min begrenzt.

### Beispiel 8

In einem 2,5-Liter Doppelmantelreaktor mit Stahlrührer und 2 Intensivkühlern wurden 108,1 g PPS, entsprechend 1,0 mol, mit 900 g Salpetersäure (69,6 %), entsprechend 9,95 mol, bei Raumtemperatur vermischt. Das Molverhältnis HNO₃ : PPS betrug 9,95 : 1. Das Reaktionsgemisch wurde dann auf eine Temperatur von 80 °C erhitzt und die Reaktionszeit bei leichter Begasung mit synthetischer Luft auf 55 min eingestellt. Die Aufarbeitung des Reaktionsgemisches wurde wie in Beispiel 1 durchgeführt.

### Beispiel 9

Es wurde wie in Beispiel 8 verfahren, jedoch wurden 120 g PPS, entsprechend 1,11 mol, und 1000 g Salpetersäure (69,6 %), entsprechend 11,0 mol, vorgelegt. Das Molverhältnis HNO₃ : PPS betrug 9,9 : 1. Die Reaktionstemperatur betrug 80 °C, die Reaktionszeit 60 min.

### Beispiel 10

Es wurde wie in Beispiel 8 verfahren, jedoch wurden 130 g PPS, entsprechend 1,20 mol, mit 1080 g Salpetersäure (69,6 %), entsprechend 11,9 mol, vermischt. Das Molverhältnis HNO₃ : PPS betrug 9,9 : 1. Die Reaktionstemperatur wurde auf 83 °C eingestellt, die Reaktionszeit betrug 65 min und die Begasung wurde mit Sauerstoff durchgeführt.

### Beispiel 11

Es wurde wie in Beispiel 10 verfahren, jedoch wurde jetzt die Reaktionstemperatur auf 85 °C und die Reaktionszeit auf 75 min eingestellt.

### Beispiel 12

Es wurde wie in Beispiel 10 verfahren, jedoch wurde in diesem Versuch die Reaktionstemperatur auf 80 °C abgesenkt und die Reaktionszeit betrug bei diesem Versuch 60 min.

Zur Charakterisierung der Produkte wurde der Oxidationsgrad mittels ¹H-NMR-Spektroskopie in Deuterodichloressigsäure bestimmt. Ferner wurde der Beginn der Zersetzung (Temperatur in °C) und der dabei auftretende Gewichtsverlust mittels thermogravimetrischer Analyse (TGA) bestimmt.

Die Ergebnisse sind in der nachfolgenden Tabelle 1 zusammengestellt:

**Tabelle 1**

| Beispiel | S-Gehalt | SO-Gehalt | SO₂-Gehalt | Oxidationsgrad | Zersetzungsbeginn | Gewichtsverlust |
|---|---|---|---|---|---|---|
| 1 | ≈ 0,25 % | ≈ 99,3 % | ≤ 0,45 % | 100,2 % | 328 °C | 15,6 % |
| 2 | ≈ 0,25 % | ≈ 99,4 % | ≤ 0,35 % | 100,1 % | 330 °C | 17,3 % |
| 3 | ≈ 0,25 % | ≈ 99,5 % | ≤ 0,25 % | 100 % | 325 °C | 15,5 % |
| 4 | ≈ 0,25 % | ≈ 99,4 % | ≤ 0,35 % | 100,1 % | 327 °C | 15,5 % |
| 5 | ≈ 0,30 % | ≈ 99,3 % | ≤ 0,35 % | 100 % | 328 °C | 15,7 % |
| 6 | ≈ 0,25 % | ≈ 99,4 % | ≤ 0,30 % | 100 % | 330 °C | 16,3 % |
| 7 | ≈ 0,35 % | ≈ 99,4 % | ≤ 0,25 % | 99,9 % | 328 °C | 17,6 % |
| 8 | ≈ 0,45 % | ≈ 98,5 % | ≤ 1,0 % | 100,5 % | 328 °C | 16,4 % |
| 9 | ≈ 0,5 % | ≈ 98,5 % | ≤ 1,0 % | 100,5 % | 329 °C | 18,0 % |
| 10 | ≈ 0,5 % | ≈ 98,5 % | ≤ 1,0 % | 100,5 % | 330 °C | 17,5 % |
| 11 | ≈ 0,5 % | ≈ 98,5 % | ≤ 1,0 % | 100,5 % | 329 °C | 18,0 % |
| 12 | ≈ 0,5 % | ≈ 98,5 % | ≤ 1,0 % | 100,5 % | 326 °C | 16,0 % |

Aus den Beispielen 1 bis 12 wird deutlich, dass der Oxidationsgrad bei allen Produkten in einem sehr engen Intervall von 100,2 ± 0,3 % liegt, wobei der Anteil an SO-Gruppen immer oberhalb von 98,5 % liegt. Der nach TGA gemessene Gewichtsverlust bei der exothermen Zersetzung, die bei einer Temperatur im Bereich von 325 bis 330 °C einsetzt, bewegt sich in einem Band innerhalb von 15,5 bis 18 %. Die Zersetzungsstufe ist sehr steil und nach einer Temperaturdifferenz von weniger als 10 K abgeschlossen.

### Beispiele 13 bis 17

In einer weiteren Versuchsreihe im Rahmen der Beispiele 13 bis 17 wurde der Füllstand des Reaktors variiert. Dabei wurde aber das Molverhältnis von HNO₃ : PPS konstant auf einem Wert von 9,6 : 1 festgehalten. Wie bei den Beispielen 3 bis 12 wurde zunächst PPS in dem Reaktionsgefäß vorgelegt, dann wurde bei Raumtemperatur Salpetersäure (Konzentration: 69,6 %) unter langsamem Rühren (ca. 50 U/min) innerhalb einer Zeitspanne von 10 bis 15 min zugegeben. Während der Zugabe stieg die Temperatur der Reaktionsmischung auf ca. 37 bis 42 °C an.

Danach wurde die Reaktionsmischung unter intensiverem Rühren (200 U/min) auf Reaktionstemperatur gebracht, wobei die anfänglich gebildeten Klumpen aus PPS wieder zerfielen. Nach Reaktionszeiten von 65 bis 80 min bei Temperaturen von 85 bis 90 °C wurden die Reaktionsmischungen klar, woraus zu schließen war, dass alles PPS vollständig als PPSO in Lösung gegangen war.

Danach wurden die Reaktionslösungen unter Rühren mit 50 U/min wieder abgekühlt, wobei ab Temperaturen von etwa 74 bis 69 °C der Beginn der Kristallisation zu beobachten war. Zur weiteren Abkühlung wurde die Drehzahl des Rührers wieder auf 200 bis 250 U/min erhöht und es wurde beobachtet, dass sich die Reaktionsmischung bei einer Temperatur von ca. 65 °C in einen eben noch rührfähigen Brei verwandelte. Zur vollständigen Ausfällung des Produkts wurden dann 500 bis 600 ml H₂O unter schnellem Rühren zugegeben und die so gebildete Suspension wurde über das Bodenventil des Reaktors abgelassen, mit reichlich Wasser neutral gewaschen und im Trockenschrank bei 120 °C getrocknet.

Die für die Beispiele 13 bis 17 eingesetzten Reaktionsmengen, - temperaturen und -zeiten sind in der nachfolgenden Tabelle 2 zusammengestellt

**Tabelle 2**

| Beisp. | HNO₃-Menge | PPS-Menge | Molverh. HNO₃ : PPS | T_{Ende} | t_{Reakt.} | Bemerkungen |
|---|---|---|---|---|---|---|
| 13 | 1080 g (12,0 mol) | 135 g (1,25 mol) | 9,6 : 1 | 87 °C | 80 min | Kristallisation bei 74 - 72 °C |
| 14 | 1120 g (12,4 mol) | 140 g (1,3 mol) | 9,6 : 1 | 85 °C | 65 min | Kristallisation bei 69 - 67 °C |
| 15 | 1200 g (13,3 mol) | 150 g (1,4 mol) | 9,6 : 1 | 89 °C | 70 min | Kristallisation bei 71 - 70 °C |
| 16 | 1280 g (14,2 mol) | 160 g (1,48 mol) | 9,6 : 1 | 87 °C | 70 min | Kristallisation bei 75 - 74 °C |
| 17 | 1360 g (15,1 mol) | 170 g (1,57 mol) | 9,6 : 1 | 85 °C | 80 min | Kristallisation bei 72 - 71 °C |

Zur genaueren Charakterisierung der Produkte wurde wie bei den vorhergehenden Beispielen der Oxidationsgrad mittels ¹H NMR-Spektroskopie in Deuterodichloressigsäure und die Zersetzungstemperatur sowie der dabei beobachtete Gewichtsverlust mittels TGA bestimmt. Die Ergebnisse sind in Tabelle 3 zusammengestellt.

**Tabelle 3**

| Beispiel | S-Gehalt | SO-Gehalt | SO₂-Gehalt | Oxidationsgrad | Zersetzungsbeginn | Gewichtsverlust |
|---|---|---|---|---|---|---|
| 13 | ≈ 0,6 % | ≈ 98,2 % | ≈ 1,2 % | 100,6 % | 330 °C | 16,4 % |
| 14 | ≈ 0,5 % | ≈ 98,3 % | ≈ 1,2 % | 100,7 % | 331 °C | 16,0 % |
| 15 | ≈ 0,55 % | ≈ 98,2 % | ≈ 1,25 % | 100,7 % | 330 °C | 16,0 % |
| 16 | ≈ 0,45 % | ≈ 98,3 % | ≈ 1,25 % | 100,8 % | 329 °C | 15,5 % |
| 17 | ≈ 0,6% | ≈ 98,3 % | ≈ 1,1 % | 100,5 % | 330 °C | 15,9 % |

Der mittels ¹H NMR-Spektroskopie bestimmte Oxidationsgrad liegt bei den Produkten der Beispiele 13 bis 17 im Bereich von 100,5 %. Auch der Anteil an SO-Gruppen ist stets größer als 98 %. Der Gewichtsverlust, gemessen bei der thermogravimetrischen Analyse (TGA), beträgt 16,0 ± 0,5 % und liegt somit in einem sehr engen Bereich.

### Beispiele 18 und 19

In einer weiteren Versuchsreihe wurde die Konzentration der für die Oxidationsreaktion eingesetzten Salpetersäure variiert. Die Oxidation wurde bei einer Temperatur von 90 °C über einen Zeitraum von 60 min und unter den weiteren Versuchsbedingungen, die in der nachfolgenden Tabelle 4 angegeben sind, in einem Rundkolben mit Rührer durchgeführt.

**Tabelle 4**

| Versuchsparameter zu den Beispielen 18 und 19. | | | | |
|---|---|---|---|---|
| Beispiel | HNO₃ -Konz. | HNO₃ -Menge (ca. 200 ml) | PPS-Menge | Molverhältnis HNO₃ : PPS |
| 18 | 75 % | 287 g (3,42 mol) | 50 g (0,46 mol) | 7,45 : 1 |
| 19 | 80 % | 291 g (3,70 mol) | 70 g (0,65 mol) | 5,7 : 1 |

Nach Beendigung der Oxidationsreaktion wurden die Reaktionslösungen der Beispiele 18 und 19 heiß (beheizter Tropftrichter) in etwa 2 Liter H₂O eingetropft, um das Produkt auszufällen. Das Produkt wurde anschließend abgesaugt, neutral gewaschen und nach dem Trocknen charakterisiert. Die Analysendaten sind in der nachfolgenden Tabelle 5 zusammengefaßt.

**Tabelle 5**

| Analysenergebnisse zu den Beispielen 18 und 19. | | | | | | |
|---|---|---|---|---|---|---|
| Beispiel | S-Gehalt | SO-Gehalt | SO₂-Gehalt | Oxidations-grad | Zersetzungsbeginn | Gewichtsverlust |
| 18 | ≈ 0,3 % | ≈ 99,5 % | ≤ 0,25 % | 100 % | 333 °C | 19,2 % |
| 19 | ≈ 0,25% | ≈ 99,25% | ≈ 0,5% | 100,2 % | 333 °C | 20,7 % |

### Beispiel 20 (Vergleichsbeispiel)

In einem 500 ml Becherglas wurden 5,4 g PPS-Pulver (entsprechend 0,05 mol) vorgelegt und mit 115 ml Salpetersäure mit einer Konzentration von 55 % versetzt. Die Mischung wurde zum Sieden erhitzt und über eine Zeitdauer von 15 min am Kochen gehalten. Das eingesetzte PPS-Pulver verklumpte dabei zu einer zähen Masse, die nicht in Lösung ging.

## Patentansprüche

1. Verfahren zur Oxidation von Polyarylensulfid zu Polyarylensulfoxid mittels Salpetersäure in einer Konzentration im Bereich von 60 bis 80 %, **dadurch gekennzeichnet, dass** Polyarylensulfid bei einer Temperatur im Bereich zwischen 75 und 100 °C mit Salpetersäure umgesetzt wird.

2. Verfahren nach Anspruch 1, **dadurch gekennzeichnet, dass** als Polyarylensulfid Polyphenylensulfid eingesetzt wird.

3. Verfahren nach Anspruch 1 oder 2, **dadurch gekennzeichnet, dass** die Konzentration der Salpetersäure, die zur Oxidation des Polyarylensulfids eingesetzt wird, im Bereich von 65 bis 75 % eingestellt wird.

4. Verfahren nach Anspruch 1 oder 2, **dadurch gekennzeichnet, dass** die Konzentration der Salpetersäure, die zur Oxidation des Polyarylensulfids eingesetzt wird, im Bereich von 68 bis 69,99 % eingestellt wird.

5. Verfahren nach einem der Ansprüche 1 bis 4, **dadurch gekennzeichnet, dass** die Oxidation des Polyarylensulfids mit Salpetersäure bei einer Temperatur im Bereich zwischen 80 und 90 °C durchgeführt wird.

6. Verfahren nach einem der Ansprüche 1 bis 5, **dadurch gekennzeichnet, dass** die Oxidation von Polyarylensulfid zu Polyarylensulfoxid über eine Zeitdauer im Bereich von 30 bis 120 min durchgeführt wird.

7. Verfahren nach einem der Ansprüche 1 bis 5, **dadurch gekennzeichnet, dass** die Oxidation von Polyarylensulfid zu Polyarylensulfoxid über eine Zeitdauer im Bereich von 60 bis 80 min durchgeführt wird.

8. Verfahren nach einem der Ansprüche 1 bis 7, **dadurch gekennzeichnet, dass** die Oxidation des Polyarylensulfids mit einer solchen stöchiometrischen Menge an Salpetersäure durchgeführt wird, dass das Molverhältnis von HNO₃ zu Polyarylensulfid im Bereich von 5 : 1 bis 20 : 1 eingehalten wird.

9. Verfahren nach einem der Ansprüche 1 bis 7, **dadurch gekennzeichnet, dass** die Oxidation des Polyarylensulfids mit einer solchen stöchiometrischen Menge an Salpetersäure durchgeführt wird, dass das Molverhältnis von HNO₃ zu Polyarylensulfid im Bereich von 9,0 : 1 bis 11 : 1 eingehalten wird.

10. Verfahren nach einem der Ansprüche 1 bis 7, **dadurch gekennzeichnet, dass** die Oxidation des Polyarylensulfids mit einer solchen stöchiometrischen Menge an Salpetersäure durchgeführt wird, dass das Molverhältnis von HNO₃ zu Polyarylensulfid im Bereich von 9,5 : 1 bis 10,5 : 1 eingehalten wird.

11. Verfahren nach einem der Ansprüche 1 bis 10, **dadurch gekennzeichnet, dass** während der Oxidationsreaktion Luft oder Sauerstoff durch die Reaktionsmischung geleitet wird.

12. Verfahren nach einem der Ansprüche 1 bis 11, **dadurch gekennzeichnet, dass** die Isolierung des entstandenen Polyarylensulfoxids aus der Reaktionsmischung durch Abkühlen der Reaktionsmischung nach der Reaktionszeit auf eine Temperatur von 60 bis 70 °C vorgenommen wird, wobei ab einer Temperatur von 75 °C erste Mengen an durch die Oxidation entstandenem Polyarylensulfoxid ausfallen, und dass dann die abgekühlte Reaktionsmischung weiter mit Wasser verdünnt wird.

13. Verfahren nach einem der Ansprüche 1 bis 12, **dadurch gekennzeichnet, dass** nach Abkühlen das Produkt aus der Reaktionsmischung abgesaugt, mit Wasser neutral gewaschen und getrocknet wird.

## Claims

1. A process for using nitric acid at a concentration of from 60 to 80% to oxidize polyarylene sulfide to polyarylene sulfoxide, wherein polyarylene sulfide is reacted at a temperature of from 75 to 100°C with nitric acid.

2. The process as claimed in claim 1, wherein the polyarylene sulfide used comprises polyphenylene sulfide.

3. The process as claimed in claim 1 or 2, wherein the concentration of the nitric acid used to oxidize the polyarylene sulfide is from 65 to 75%.

4. The process as claimed in claim 1 or 2, wherein the concentration of the nitric acid used to oxidize the polyarylene sulfide is from 68 to 69.99%.

5. The process as claimed in any of claims 1 to 4, wherein the oxidation of the polyarylene sulfide by nitric acid is carried out at from 80 to 90°C.

6. The process as claimed in any of claims 1 to 5, wherein the oxidation of polyarylene sulfide to polyarylene sulfoxide is carried out over a period of from 30 to 120 min.

7. The process as claimed in any of claims 1 to 5, wherein the oxidation of polyarylene sulfide to polyarylene sulfoxide is carried out over a period of from 60 to 80 min.

8. The process as claimed in any of claims 1 to 7, wherein the stoichiometric amount of nitric acid used to oxidize the polyarylene sulfide is such as to comply with a molar ratio of HNO₃ to polyarylene sulfide of from 5 : 1 to 20 : 1.

9. The process as claimed in any of claims 1 to 7, wherein the stoichiometric amount of nitric acid used to oxidize the polyarylene sulfide is such as to comply with a molar ratio of HNO₃ to polyarylene sulfide of from 9.0 : 1 to 11 : 1.

10. The process as claimed in any of claims 1 to 7, wherein the stoichiometric amount of nitric acid used to oxidize the polyarylene sulfide is such as to comply with a molar ratio of HNO₃ to polyarylene sulfide of from 9.5 : 1 to 10.5 : 1.

11. The process as claimed in any of claims 1 to 10, wherein air or oxygen is passed through the reaction mixture during the oxidation reaction.

12. The process as claimed in any of claims 1 to 11, wherein the resultant polyarylene sulfoxide is isolated from the reaction mixture by cooling the reaction mixture to a temperature of from 60 to 70°C after the reaction time, whereupon the polyarylene sulfoxide resulting from the oxidation begins to precipitate from a temperature of 75°C, and the cooled reaction mixture is then diluted with water.

13. The process as claimed in any of claims 1 to 12, wherein, after cooling, the product is filtered off from the reaction mixture with suction, washed with water until neutral and dried.

## Revendications

1. Procédé pour l'oxydation de poly(sulfure d'arylène) en poly(arylène-sulfoxyde) au moyen d'acide nitrique à une concentration dans la plage allant de 60 à 80 %, **caractérisé en ce qu'**on fait réagir le poly(sulfure d'arylène) avec l'acide nitrique à une température dans la plage comprise entre 75 et 100°C.

2. Procédé selon la revendication 1, **caractérisé en ce qu'**on utilise en tant que poly(sulfure d'arylène) du poly(sulfure de phénylène).

3. Procédé selon la revendication 1 ou 2, **caractérisé en ce que** la concentration de l'acide nitrique qui est utilisé pour l'oxydation du poly(sulfure d'arylène) est ajustée dans la plage allant de 65 à 75 %.

4. Procédé selon la revendication 1 ou 2, **caractérisé en ce que** la concentration de l'acide nitrique qui est utilisé pour l'oxydation du poly (sulfure d'arylène) est ajustée dans la plage allant de 68 à 69,99 %.

5. Procédé selon l'une quelconque des revendications 1 à 4, **caractérisé en ce que** l'oxydation du poly(sulfure d'arylène) par l'acide nitrique est effectuée à une température dans la plage comprise entre 80 et 90°C.

6. Procédé selon l'une quelconque des revendications 1 à 5, **caractérisé en ce que** l'oxydation du poly(sulfure d'arylène) en poly(arylène-sulfoxyde) est effectuée pendant une durée de 30 à 120 minutes.

7. Procédé selon l'une quelconque des revendications 1 à 5, **caractérisé en ce que** l'oxydation du poly(sulfure d'arylène) en poly(arylène-sulfoxyde) est effectuée pendant une durée dans la plage allant de 60 à 80 minutes.

8. Procédé selon l'une quelconque des revendications 1 à 7, **caractérisé en ce que** l'oxydation du poly(sulfure d'arylène) est effectuée avec une quantité stoechiométrique d'acide nitrique telle que le rapport molaire de HNO₃ au poly(sulfure d'arylène) est maintenu dans la plage de 5:1 à 20:1.

9. Procédé selon l'une quelconque des revendications 1 à 7, **caractérisé en ce que** l'oxydation du poly(sulfure d'arylène) est effectuée avec une quantité stoechiométrique d'acide nitrique telle que le rapport molaire de HNO₃ au poly(sulfure d'arylène) est maintenu dans la plage de 9,0:1 à 11:1.

10. Procédé selon l'une quelconque des revendications 1 à 7, **caractérisé en ce que** l'oxydation du poly(sulfure d'arylène) est effectuée avec une quantité stoechiométrique d'acide nitrique telle que le rapport molaire de HNO₃ au poly(sulfure d'arylène) est maintenu dans la plage de 9,5:1 à 10,5:1.

11. Procédé selon l'une quelconque des revendications 1 à 10, **caractérisé en ce que** pendant la réaction d'oxydation on fait passer de l'air ou de l'oxygène dans le mélange réactionnel.

12. Procédé selon l'une quelconque des revendications 1 à 11, **caractérisé en ce que** l'isolement du poly(arylène-sulfoxyde) formé, à partir du mélange réactionnel, est effectué par refroidissement du mélange réactionnel, au bout du temps de réaction, jusqu'à une température de 60 à 70°C, les premières quantités de poly(arylène-sulfoxyde) produit par l'oxydation se séparant à partir d'une température de 75°C, et **en ce que** le mélange réactionnel refroidi est ensuite dilué davantage avec de l'eau.

13. Procédé selon l'une quelconque des revendications 1 à 12, **caractérisé en ce que** le produit, après refroidissement, est isolé par filtration à la trompe, lavé à neutralité avec de l'eau, puis séché.
